# EUROPEAN PATENT APPLICATION

(11) **EP 4 455 181 A1**
(43) Date of publication of application: **30.10.2024**
(21) Application number: 23170218.4
(22) Date of filing: 26.04.2023
(51) Int. Cl.: C08G 59/17, C08G 59/50

(54) **TWO-COMPONENT EPOXY SYSTEMS**

(71) Applicant: Sika Technology AG, 6340 Baar (CH)
(72) Inventor: The designation of the inventor has not yet been filed
(74) Representative: Sika Patent Attorneys

(57) **Abstract**

Subject of the invention is a two-component epoxy system, comprising a part (A) comprising at least one epoxide bearing two or more epoxy groups and at least one (meth)acrylate, and a part (B) comprising at least one amine and at least one metal catalyst, wherein parts (A) and (B) are physically separated from each other.

## Description

### Field of the invention

The invention relates to two-component epoxy systems, to coatings prepared from such systems, to uses of such coating systems and to coating methods.

### Background of the invention

Construction systems based on reactive resins, such as epoxy systems and in particular two-component epoxy systems made of an epoxy resin component and a hardener component frequently have high viscosities. Any adjustments of these viscosities to levels which render the epoxy systems applicable in practice usually require the addition of plasticizers and/or solvents. However, plasticizers often have an adverse effect on the mechanical properties and frequently cause a greasy film on top of the coating. Further, solvents such as benzyl alcohol can result in unwanted emissions of volatile organic compounds (VOCs) and also in undesired smell. Moreover, the reactive starting materials of these resins often react much too fast with each other, thus resulting in a very short open time or pot life. Dilution with solvents and/or plasticizers yet causes the aforementioned negative effects.

US 7,820,736 B2 describes a multi-component epoxide resin coating composition for fire protection with a component (A), which contains at least one epoxide resin and at least one vinyl ester, a curing agent component (B), which contains at least one curing agent for the epoxide resin, and an intumescing component (C), which contains at least one acid constituent, at least one source of carbon and at least one gas-forming agent. However, the coating composition is intended to provide fire protection, and there is no description of a radical polymerization of the vinyl ester. Consequently, US 7,820,736 B2 does not discuss any metal catalysts for such a radical polymerization or any effects thereof.

Overall, there remains a general desire for improved two-component epoxy systems.

### Problem underlying the invention

It is an object of the present invention to provide a two-component epoxy system which at least partially overcomes the drawbacks encountered in the art.

It is a further object of the present invention to provide a two-component epoxy system which allows to lower and to control the viscosities of the system itself and of coatings made from the system.

It is furthermore an object of the present invention to provide a two-component epoxy system which has a prolonged pot time (pot life).

It is moreover an object of the present invention to provide a two-component epoxy system which suppresses unwanted emissions of volatile organic compounds, and/or which does not pose undesired health risks.

It is an additional object of the present invention to provide a two-component epoxy system which gives coatings having improved mechanical properties and/or do not show greasy films on top of the coatings.

It is also object of the present invention to provide a coating, a use and a coating method, respectively, which at least partially overcomes the drawbacks encountered in the art.

### Disclosure of the invention

Surprisingly, it was found that the problem underlying the invention is overcome by two-component epoxy systems, coatings, uses and coating methods according to the claims. Further embodiments of the invention are outlined throughout the description.

Subject of the invention is a two-component epoxy system, comprising:
a part (A) comprising at least one epoxide bearing two or more epoxy groups and at least one (meth)acrylate, and
a part (B) comprising at least one amine and at least one metal catalyst,
wherein parts (A) and (B) are physically separated from each other.

### Part (A)

The at least one epoxide bearing two or more epoxy groups may also be referred to as an epoxy compound. An epoxy group is a functional and highly reactive group comprised of two carbons and an oxygen in a ring formation, which is sometimes also referred to as oxirane group. The epoxide contains at least two epoxy groups, but may also contain more than two epoxy groups, especially three epoxy groups or four epoxy groups. The epoxy groups of the at least one epoxide are regularly terminal epoxy groups and are preferably glycidyl groups (2,3-epoxypropyl groups).

The at least one (meth)acrylate bears at least one (meth)acryl group. As used herein, the term (meth)acrylate encompasses an acrylate and a methacrylate, preferably a methacrylate only, and the term (meth)acrylic group encompasses an acrylic group and a methacrylic group, preferably a methacrylic group only. The at least one (meth)acrylate typically reduces the viscosity of part (A), and upon mixing with part (B) also the viscosity of the entire resulting composition, so that it may herein also be referred to as "thinner" or "diluent".

### Part (B)

The at least one amine is an amine compound, i.e., it bears at least one amine group. The at least one amine is thus regularly a primary amine having an -NH₂ group, a secondary amine having an -NHR group, a tertiary amine having an -NR₂ group, or a combination thereof. The at least one amine may also bear more than one amine group, for example at least two, at least three, at least four or more than four amine groups.

The at least one metal catalyst is based on a metal, wherein the term "metal" is used herein in the usual chemical meaning, thereby excluding metalloids (B, Si, Ge, As, Sb, Te) and non-metals. The metal of the metal catalyst can be present in metallic form (oxidation state = 0; M⁰) or in oxidized form (oxidation state > 0; M^{x+}) and can especially be present as a metal complex. As used herein the term "catalyst" means that the metal catalyst can promote a polymerization of the at least one (meth)acrylate in part (A), more specifically a radical polymerization of the at least one (meth)acrylate, especially upon exposure to oxygen.

### Physical separation

In a two-component epoxy system according to the present invention, parts (A) and (B) are physically separated from each other, i.e., there is no physical contact between them. The two-component epoxy system according to the present invention may thus also be termed a kit of parts, comprising parts (A) and (B). The physical separation of parts (A) and (B) may be achieved by storing parts (A) and (B) in two different containers, or in two different compartments of one container. The physical separation may in particular be such that no reaction between the at least one epoxide comprised by part (A) and the at least one amine comprised by part (B) can occur.

### Reactions upon mixing

When parts (A) and (B) of a two-component epoxy system according to the present invention are mixed, the at least one epoxide bearing two or more epoxy groups and the at least one amine react with each other and more specifically undergo an addition reaction. In this way, a macromolecular reaction product is formed, and the reaction between the epoxide and the amine can be seen as a first curing reaction which leads to a hardening of the mixture of parts (A) and (B), and the viscosity of the total mixed system is gradually lowered, thereby contributing to the desired coating properties of the two-component epoxy system.

Additionally, when parts (A) and (B) of a two-component epoxy system according to the present invention are mixed, the metal catalyst - preferably in combination with a synergistically acting C-H-acidic or N-H-acidic compound, more preferably a synergistically acting C-H-acidic compound - in part (B) starts a radical polymerization of the (meth)acryl groups of the at least one (meth)acrylate in part (A) upon contact with air or another source of oxygen. Accordingly, no thermal radical initiators such as peroxides are needed, and the two-component epoxy system according to the present invention is preferably free of peroxides, and is more preferably free of thermal radical initiators. Overall, the at least one (meth)acrylate acts as a reactive thinner that polymerizes in a second curing reaction. In this way, the viscosity of the total mixed system is also gradually lowered, thereby also contributing to the desired coating properties of the two-component epoxy system. A further consequence of this second curing reaction is that neither evaporation nor migration nor plasticizing effects occur.

### Effects

As mentioned above, the (meth)acrylate in the two-component epoxy system according to the present invention, acts as a thinner or diluent, so that the viscosity of the two-component epoxy system and in particular of its part (A) can be controlled. Additionally, the two separate curing reactions, which occur upon mixing parts (A) and (B), both individually contribute to the hardening of the two-component epoxy system and thereby also to the hardening time, but can simultaneously be used to keep the system viscous enough to allow for a suitable application thereof and for a prolonged processing time. Accordingly, the two-component epoxy system according to the present invention allows to lower and control the viscosities of the system itself and of coatings made from the system. Furthermore, because of the achieved control, it is possible to achieve a balance between a desired hardening and hence between the coating properties of the two-component epoxy system on the one hand and the viscosity and hence the processing properties of the two-component epoxy system on the other hand.

Further, because of the achieved control over the viscosity of the two-component epoxy system before mixing parts (A) and (B), two-component epoxy system according to the present invention has a prolonged pot time (prolonged pot life)(. Additionally, because of the second curing reaction in which the at least one (meth)acrylate is polymerized when parts (A) and (B) are mixed, unwanted emissions of volatile organic compounds from the system are advantageously suppressed.

It has additionally been found that a two-component epoxy system according to the present invention gives coatings which have improved mechanical properties. In particular, a coating made from a two-component epoxy system according to the present invention regularly shows an improved elongation at break. Further, a coating made from a two-component epoxy system according to the present invention regularly shows an improved tensile strength. These mechanical performances indicate that the coating can be applied to a desired surface at no or less rupture, and further indicates that the coating will have improved mechanical resistance during its lifetime. It has moreover been found that a two-component epoxy system according to the present invention gives coatings which do not show greasy films on top of the coatings. Accordingly, the coatings have an improved touch and can confer slip resistance to the underground onto which they have been applied (herein also referred to as surface properties of the coating).

### Further preferences for the two-component epoxy system

It is preferred for a two-component epoxy system according to the present invention that the at least one (meth)acrylate bears two or more (meth)acrylic groups. With such a (meth)acrylate the dilution of part (A) and hence the viscosity thereof can be controlled more effectively, and at the same time the curing time of the second curing reaction, i.e., of the radical polymerisation of the (meth)acrylate upon mixing parts (A) and (B), can also be controlled more effectively. This further contributes to the balance between the coating properties of the two-component epoxy system and the processing properties of the two-component epoxy system.

It is particularly preferred for a two-component epoxy system according to the present invention that the (meth)acrylate is selected from triethylene glycol dimethacrylate (TEGDMA), butandiol-dimethacrylate, hexandiol-dimethacrylate, decandiol-dimethacrylate (e.g. Sartomer SR 261H), neopentyl glycol dimethacrylate (NPGDMA), bisphenol A propoxylated- and/or ethoxylated dimethacrylate (which may alternatively be termed a propoxylated- and/or ethoxylated bisphenol A dimethacrylate), and trimethylolpropane trimethacrylate (TMPTMA), preferably selected from triethylene glycol dimethacrylate (TEGDMA), butandiol-dimethacrylate, hexandiol-dimethacrylate, decandiol-dimethacrylate (e.g. Sartomer SR 261H), neopentyl glycol dimethacrylate (NPGDMA), and trimethylolpropane trimethacrylate (TMPTMA). When one of the listed (meth)acrylates is comprised by the two-component epoxy system, the mechanical properties thereof are further improved. In particular, rupture upon application of the system is further reduced, and the mechanical resistance during the lifetime of the coating is enhanced. Also, touch and slip resistance conferred by a coating made from the two-component epoxy system are improved.

It is particularly preferred for a two-component epoxy system according to the present invention that the metal catalyst is selected from metal catalysts based on copper (Cu), manganese (Mn), iron (Fe), cobalt (Co), tin (Sn), cerium (Ce), zirconium (Zr) and vanadium (V), preferably selected from copper (Cu), manganese (Mn) and iron (Fe), more preferably selected from Cu(II), Mn(II), Mn (III) and Fe(III), most preferably selected from Cu(ll) and Fe(lll) (the positive roman number in round brackets denotes the positive oxidation state of the respective metal). With one or more of these metal catalysts, the polymerization of the (meth)acrylate upon mixing parts (A) and (B) can be even more complete so that undesired emissions of detrimental volatile organic compounds can be further suppressed.

It is particularly preferred for a two-component epoxy system according to the present invention that the metal catalyst is selected from a copper catalyst, an iron catalyst and/or a manganese catalyst. When the metal catalyst is selected from a copper catalyst, an iron catalyst and/or a manganese catalyst the polymerization of the (meth)acrylate upon mixing parts (A) and (B) is regularly such that basically no detrimental volatile organic compounds are released from the system, thereby enhancing the safety thereof. Additionally, the mechanical properties of a coating made from the two-component epoxy system according to the present invention can also be further improved, especially its resistance to rupture and its overall resistance during its lifetime.

It is especially preferred for a two-component epoxy system according to the present invention that the metal catalyst based on copper (Cu) is selected from the group consisting of amine complexes of copper halogenides, particularly bis(ethylenediamine) complexes of copper halogenides, more particularly bis[(N,N,N',N'-tetramethylethylenediamine) complexes of copper halogenides, particularly di-µ-hydroxo-bis[(N,N,N',N'-tetramethylethylenediamine)copper(II)] chloride and bis[(N,N,N',N'-tetramethylethylenediamine)copper(II)] dichloride.

It is also especially preferred for a two-component epoxy system according to the present invention that the metal catalyst based on iron (Fe) is selected from the group consisting of iron carboxylates, particularly is 1,5-dimethyl 3-methyl-9-oxo-2,4-bis(pyridin-2-yl)-7-[(pyridin-2-yl)methyl]-3,7-diazabicyclo[3.3.1]nonane-1,5-dicarboxylate dichloroiron hydrate.

It is especially preferred for a two-component epoxy system according to the present invention that the metal catalyst based on manganese (Mn) is selected from the group consisting of manganese(II) carboxylate and manganese(III) carboxylate. When one or more of these catalysts is used, the polymerisation of the (meth)acrylate is particularly fostered so that hazardous emissions of volatile organic compounds from the system can be further reduced and regularly completely avoided. Also, the resistance to rupture and the resistance during lifetime of a coating made from the two-component epoxy system according to the present invention with the use of such a catalyst is particularly improved. Moreover, such a coating does regularly not show greasy films on top thereof so that the coating has an improved touch and confers slip resistance to the underground onto which it has been applied.

It is preferred for a two-component epoxy system according to the present invention that the at least one epoxide is selected from the group consisting of bisphenol A diglycidyl ether (2,2-bis[4-(glycidyloxy)phenyl]propane), bisphenol F diglycidyl ether (bis[4-(glycidyloxy)phenyl]methane) and polyfunctional phenol novolac glycidyl ether. When one or more of these epoxides is/are used, the addition reaction between the epoxide and the amine can be advantageously controlled so as to maintain a desired viscosity over a prolonged period of time. At the same time, the addition reaction (or first curing reaction) can impart desired coating properties to the two-component epoxy system, thereby contributing to a balance between processing time on the one hand and coating performance on the other hand.

It is preferred for a two-component epoxy system according to the present invention that the amine, i.e., the amine component in part (B), is a polyfunctional amine (an amine with a functionality of ≥ 2, i.e., bearing two or more amine groups. The amine component may be either a linear amine or a branched amine. The skeleton of the amine component may contain aliphatic, aromatic, aliphatic-aromatic, cycloaliphatic and heterocyclic structures. The amine group (or amine function) itself is generally aliphatic, and the nitrogen is for example not part of an aromatic ring. Polymers which are selected from polyamines, dendritic polyamines, polyimines (such as, for example, the polyethyleneimines of the Lupasol^{®} type from BASF SE), polyaminoamides, polyvinylamines or mixtures thereof are preferred as the polyfunctional amine component. When one or more of these polyfunctional amines is used, the addition reaction between the epoxide and the amine can also be advantageously controlled based on the chemical nature of the amine. Especially, also in this way a desired viscosity can be maintained over a prolonged period of time. At the same time, the addition reaction (or first curing reaction) can impart desired coating properties to the two-component epoxy system, here due to the selection of the amine. The selection of the amine can thus also contribute to a balance between processing time on the one hand and coating performance on the other hand. All these effects are particularly pronounced when the amine component in part (B) is one of the group consisting of 1,3-bis(aminomethyl)cyclohexane, 3-(aminomethyl)-3,5,5-trimethylcyclohexane-1-amine (isophorone diamine; IPDA), 1,3-bis(aminomethyl)benzene (MXDA), trimethylhexane-1,6-diamine (TMD), various polyetheramines (e.g. Polyetheramine D230 from BASF) including mono-, di- and triamines, 4,4'-methylenebis(cyclohexylamine), and a fatty acid dimer diamine. Hence, it is particularly preferred for a two-component epoxy system according to the present invention that the amine is selected from the group consisting of 1,3-bis(aminomethyl)cyclohexane, 3-(aminomethyl)-3,5,5-trimethylcyclohexane-1-amine (isophorone diamine; IPDA), 1,3-bis(aminomethyl)benzene (MXDA), trimethylhexane-1,6-diamine (TMD), various polyetheramines (e.g. Polyetheramine D230 from BASF) including mono-, di- and triamines, 4,4'-methylenebis(cyclohexylamine), and a fatty acid dimer diamine.

It is preferred for a two-component epoxy system according to the present invention that a coating prepared from the two-component epoxy system has a viscosity of ≤ 10,000 mPas, preferably of ≤ 6,000 mPas, more preferably of ≤ 5,000 mPas, yet more preferably of ≤ 3,000 mPas, yet more preferably of ≤ 1,500 mPas, yet more preferably of ≤ 1,000 mPas, and most preferably of ≤ 600 mPas. Here, the viscosity is typically measured after mixing for 1 min at 1000 rpm (using a general speed mixer). A coating prepared from the two-component epoxy system of the invention which has a viscosity of ≤ 3,000 mPas is particularly suitable for use as a body coat, a coating which has a viscosity of ≤ 1,500 mPas is particularly suitable use in thin-layer-applications, and a coating which has a viscosity of ≤ 600 mPas is particularly suitable for decoration purposes or top coats. When the two-component epoxy system exhibits a viscosity as mentioned above, the initial high viscosity, which allows for an advantageously prolonged processing time of the system after mixing parts (A) and (B) thereof, has been sufficiently lowered to provide a coating having improved mechanical properties, especially crack resistance and resistance over its lifetime, as well as improved touch and improved slip resistance.

It is preferred for a two-component epoxy system according to the present invention that part (A) of the two-component epoxy system comprises a C-H-acidic compound or N-H-acidic compound, preferably a C-H-acidic compound such as a β-dicarbonyl compound, more preferably a planar C-H-acidic compound such as a planar β-dicarbonyl compound. The β-dicarbonyl compound preferably is a β-diketone, β-ketoester or 1,3-dicarboxylic acid derivative. The β-dicarbonyl compound preferably is cyclic, more preferably a cyclic β-diketone or cyclic β-ketoester, e.g. acetylbutyrolactone.

The said 1,3-dicarboxylic acid derivative preferably is selected from the group consisting of an ester, amide or acetal. A preferred such derivative is barbituric acid or barbituric acid having an alkyl substituent in 5-position. The said alkyl substituent in 5-position may in turn be substituted by a phenyl ring; a preferred such alkyl substituent in 5-position may is benzyl.

Another suitable C-H-acidic compound is a ketosulfinic acid.

An N-H-acidic compound which is planar is preferred. A suitable N-H-acidic compound is saccharin or succinimide.

When part (A) of the two-component epoxy system comprises any such C-H-acidic compound or N-H-acidic compound as mentioned before, preferably any such C-H-acidic compound as mentioned before, an initially slow reaction between part (A) and part (B) upon mixing them can be accelerated. This can also contribute to an improved balance between an extended pot life of the mixture on the one hand and coating performance, especially improved mechanical properties, touch and slip resistance, on the other hand. Any such C-H-acidic compound or N-H-acidic compound as mentioned before, preferably any such C-H-acidic compound as mentioned before, contributes to an earlier tack-free time on rough surfaces. The C-H-acidic compounds or N-H-acidic compounds as mentioned before, preferably the C-H-acidic compound as mentioned before, moreover, contribute to maintain UV stability of the coating.

It is preferred for a two-component epoxy system according to the present invention that the two-component epoxy system is free of any mercapto compound. Mercapto compounds are sometimes used as a reactive thinner in epoxy systems. However, mercapto compounds often pose a health hazard accompanied by a particularly unpleasant or awful smell. Accordingly, when the two-component epoxy system according to the present invention is free of any mercapto compound, its health and safety properties are advantageously enhanced.

### Further subjects of the invention

Subject of the invention is also a coating prepared from a two-component epoxy system according to the present invention by mixing parts (A) and (B). The preferred embodiments of the two-component epoxy system described herein including the claims are likewise preferred for this coating in an analogous manner. It is especially preferred that the coating comprises the at least one (meth)acrylate in polymerized form which indicates that the second curing reaction has occurred which contributes to the mechanical properties of the coating and its surface properties.

Subject of the invention is also a use of a two-component epoxy system according to the present invention for coating a substrate. The substrate is preferably a concrete substrate. The preferred embodiments of the coating system described herein including the claims are likewise preferred for the inventive use in an analogous manner. The use according to the present invention yields a coated substrate, or a substrate having a coating.

Subject of the invention is also a coating method, comprising the steps:
(i) providing a substrate, and
(ii) coating the substrate by mixing parts (A) and (B) of a two-component epoxy system according to the present invention and applying the resulting mixture onto the substrate.

The substrate is preferably a concrete substrate. The preferred embodiments of the coating system described herein including the claims are likewise preferred for the inventive coating method in an analogous manner. It is especially preferred that a radical polymerization of the at least one (meth)acrylate occurs in step (ii) as this radical polymerization (or second curing reaction) contributes to the mechanical properties of the finally achieved coating and its surface properties.

### Examples

### Materials and methods

In the examples below, the following raw materials were used:
- Epoxy resin A: CAS No. 25068-38-6, Araldite GY 240, from Huntsman
- Epoxy novolac resin: Araldite EPN 1179, from Huntsman
- Triethylene glycol dimethacrylate (TEGDMA): Sartomer SR 205H, from Sartomer, Arkema Group
- Neopentyl glycol dimethacrylate (NPGDMA)
- Monoacrylate: Trimethylolpropane formal acrylate, Laromer LR 8887, from BASF
- Trimethylolpropane trimethacrylate (TMPTMA): Sartomer SR350D, from Sartomer, Arkema Group
- A-resin dimethacrylate: CAS No. 41637-38-1, bisphenol A ethoxylated dimethacrylate, Sartomer SR 348L, from Sartomer Arcema
- ABL, cyclic β-diketone, from Hansen Group
- Byk 088: defoamer based on silicones and polymers, from Altana
- 1,3-BAC: CAS No. 2579-20-6, 1,3-bis(aminomethyl)cyclohexane, from Mitsubishi Gas
- 4,4'-Methylenebis(cyclohexylamine): Ancamine 2693, from Mitsubishi Gas
- Dimer diamine: Priamine 1073, from Croda
- Cu-TMEDA solution (0,2% in triethyl phosphate): CAS No. 30698-64-7, Di-µ-hydroxo-bis[(N,N,N'.N'-tetramethylethylenediamine)copper(II)] chloride, from Aldrich
- Fe-complex chloride: 1,5-dimethyl 3-methyl-9-oxo-2,4-bis(pyridin-2-yl)-7-[(pyridin-2-yl)methyl]-3,7-diazabicyclo[3.3.1]nonane-1,5-dicarboxylate dichloroiron hydrate, CAS no. 478945-46-9, Borchi OXY-Coat 1410, from Milliken/Borchers
- Mn decanoate: Deca Manganese 8 HS, from Milliken/Borchers
- Bis-(2-dimethylaminoethyl) urea: CAS no. 52338-87-1, Versamid EH50, from Evonik alt. Gabriel

Viscosities were measured after mixing with a speed mixer for 1 min at 1000 rpm. The two-component epoxy systems were applied at room temperature with a 1000 µm squeegee ("Rakel") on polypropylene sheets. Drying was done at 23 °C at 50% relative humidity (standard climate), and the pot time (pot life) as well as the drying time were observed/recorded. The dried sheets were tested for elongation at break and tensile strength.

### Comparative Examples 1 and 2 and Examples 1 to 3:

In these Comparative Examples (Comp. Ex.) and Examples (Ex.), respectively, the (meth)acrylate component of a two-component epoxy system according to the present invention was varied. The respective part (A), also referred to herein as PTA, and part (B), also referred to herein as PTB, were mixed separately. The respective components and amounts of the PTAs and PTBs as well as the ratios thereof are reported in Table 1 below. Thereafter, parts (A) and (B) were mixed for 1 min at 1000 rpm using a speed mixer. The results of the viscosity measurement, the recorded pot life and the recorded drying time as well as elongation at break and tensile strength of the obtained specimen are also reported in Table 1.

**Table 1**

| | **Comp. Ex. 1** | | **Comp. Ex. 2** | | **Ex. 1** | | **Ex. 2** | | **Ex. 3** | |
|---|---|---|---|---|---|---|---|---|---|---|
| **Ratio PTA/PTB** | 100/25 | | 100/25 | | 100/20 | | 100/20 | | 100/20 | |
| | PTA [wt.%] | PTB [wt.%] | PTA [wt.%] | PTB [wt.%] | PTA [wt.%] | PTB [wt.%] | PTA [wt.%] | PTB [wt.%] | PTA [wt.%] | PTB [wt.%] |
| **Component** | | | | | | | | | | |
| Epoxy resin A | 80.00 | | 80.00 | | 80.00 | | 80.00 | | 80.00 | |
| TEGDMA | | | | | 5.00 | | 5.00 | | | |
| NPGDMA | | | | | | | | | 5.00 | |
| A-resin dimethacrylate | | | | | 15.00 | | 15.00 | | 15.00 | |
| ABL | 0.50 | | 0.50 | | 0.50 | | 0.50 | | 0.50 | |
| Byk 088 | | | 1.00 | | | | 1.00 | | | |
| 1,3-BAC | | 15.00 | | 15.00 | | 15.00 | | 15.00 | | 15.00 |
| Cu-TMEDA solution | | 0.30 | | 0.30 | | 0.30 | | 0.30 | | 0.30 |
| Bis-(2-dimethylaminoethyl) urea | | 4.70 | | 4.70 | | 4.70 | | 4.70 | | 4.70 |
| Viscosity [mPas] | 11300 | | 11300 | | 3480 | | 3480 | | 3274 | |
| Pot life [min] | 55 | | 55 | | 90 | | 90 | | about 120 | |
| Drying time [min] | 125 | | 125 | | 170 | | 170 | | about 240 | |
| Elongation at break [%] | ¹⁾ | | ¹⁾ | | 0 | | 0 | | ¹⁾ | |
| Tensile strength [MPa] | ¹⁾ | | ¹⁾ | | 14.1 | | 12.9 | | ¹⁾ | |

| | | | | | | | | | | |
|---|---|---|---|---|---|---|---|---|---|---|
| ¹⁾ not detachable from plate, too brittle | | | | | | | | | | |

### Comparative Example 3 and Examples 4:

In Comparative Example 3 and Example 4, respectively, the amine component, more specifically a polyamine functioning as a hardener component, of a two-component epoxy system according to the present invention was varied. The respective parts (A) and (B) were mixed separately. The respective components and amounts of the PTAs and PTBs as well as the ratios thereof are reported in Table 2 below. Thereafter, parts (A) and (B) were mixed for 1 min at 1000 rpm using a speed mixer.

**Table 2**

| | **Comp. Ex. 3** | | **Ex. 4** | |
|---|---|---|---|---|
| **Ratio PTA/PTB** | 100/69 | | 100/55 | |
| | PTA [wt.%] | PTB [wt.%] | PTA [wt.%] | PTB [wt.%] |
| **Component** | | | | |
| Epoxy resin A | 80.00 | | 80.00 | |
| TEGDMA | | | 5.00 | |
| A-resin dimethacrylate | | | 15.00 | |
| 4,4'-Methylenebis-(cyclohexylamine) | | 15.00 | | 15.00 |
| Cu-TMEDA solution | | 0.30 | | 0.30 |
| Bis-(2-dimethylaminoethyl) urea | | 4.70 | | 4.70 |

### Comparative Examples 4 and 5 and Examples 5 and 6:

In these Comparative Examples and Examples, respectively, the epoxy component of a two-component epoxy system according to the present invention was varied. In addition, the amine component of the two-component epoxy system according to the present invention was also varied. The respective parts (A) and (B) were mixed separately. The respective components and amounts of the PTAs and PTBs as well as the ratios thereof are reported in Table 3 below. Thereafter, parts (A) and (B) were mixed for 1 min at 1000 rpm using a speed mixer.

**Table 3**

| | **Comp. Ex. 4** | | **Comp. Ex. 5** | | **Ex. 5** | | **Ex. 6** | |
|---|---|---|---|---|---|---|---|---|
| **Ratio PTA/PTB** | 100/72 | | 100/106 | | 100/58 | | 100/85 | |
| | PTA [wt.%] | PTB [wt.%] | PTA [wt.%] | PTB [wt.%] | PTA [wt.%] | PTB [wt.%] | PTA [wt.%] | PTB [wt.%] |
| Component | | | | | | | | |
| Epoxy novolac resin | 80.00 | | 80.00 | | 80.00 | | 80.00 | |
| TEGDMA | | | | | 10.00 | | 10.00 | |
| A-resin dimethacrylate | | | | | 10.00 | | 10.00 | |
| 4,4'-Methylene-bis(cyclohexyl-amine) | | 75.00 | | | | 75.00 | | |
| Dimer diamine | | | | 75.00 | | | | 75.00 |
| Cu-TMEDA solution | | 1.50 | | 1.50 | | 1.50 | | 1.50 |
| Bis-(2-dimethylaminoethyl) urea | | 23.50 | | 23.50 | | 23.50 | | 23.50 |

### Comparative Example 6 and Examples 7 to 10:

In these Comparative Examples and Examples, respectively, the (meth)acrylate component of a two-component epoxy system according to the present invention was varied. The respective parts (A) and (B) were mixed separately. The respective components and amounts of the PTAs and PTBs as well as the ratios thereof are reported in Table 4 below. Thereafter, parts (A) and (B) were mixed for 1 min at 1000 rpm using a speed mixer. The results of the viscosity measurement, the recorded pot life and the recorded drying time as well as elongation at break and tensile strength of the obtained specimen are also reported in Table 4.

**Table 4**

| | **Comp. Ex. 6** | | **Ex. 7** | | **Ex. 8** | | **Ex. 9** | | **Ex. 10** | |
|---|---|---|---|---|---|---|---|---|---|---|
| **Ratio PTA/PTB** | 100/25 | | 100/20 | | 100/20 | | 100/20 | | 100/20 | |
| | PTA [wt.%] | PTB [wt.%] | PTA [wt.%] | PTB [wt.%] | PTA [wt.%] | PTB [wt.%] | PTA [wt.%] | PTB [wt.%] | PTA [wt.%] | PTB [wt.%] |
| **Component** | | | | | | | | | | |
| Epoxy resin A | 80.00 | | 80.00 | | 80.00 | | 80.00 | | 80.00 | |
| TEGDMA | | | 5.00 | | | | | | | |
| NPGDMA | | | | | 5.00 | | | | | |
| Monoacrylate | | | | | | | 5.00 | | | |
| TMPTMA | | | | | | | | | 5.00 | |
| A-resin dimethacrylate | | | | | 15.00 | | 15.00 | | 15.00 | |
| ABL | 0.50 | | 0.50 | | 0.50 | | 0.50 | | 0.50 | |
| Byk 088 | 1.00 | | 1.00 | | 1.00 | | 1.00 | | 1.00 | |
| 1,3-BAC | | 15.00 | | 15.00 | | 15.00 | | 15.00 | | 15.00 |
| Cu-TMEDA solution | | 0.30 | | 0.30 | | 0.30 | | 0.30 | | 0.30 |
| Bis-(2-dimethylaminoethyl) urea | | 4.70 | | 4.70 | | 4.70 | | 4.70 | | 4.70 |
| Viscosity [mPas] | 10970 | | 3551 | | 3279 | | 4127 | | 3966 | |
| Pot life [min] | 30 (solid) | | 105 (solid) | | 120 | | 110 | | 130 | |
| Drying time [min] | 130 (dry) | | 180 | | 210 | | 190 | | 240 | |
| Elongation at break [%] | ²⁾ | | ²⁾ | | ²⁾ | | ²⁾ | | ²⁾ | |
| Tensile strength [MPa] | ²⁾ | | ²⁾ | | ²⁾ | | ²⁾ | | ²⁾ | |

| | | | | | | | | | | |
|---|---|---|---|---|---|---|---|---|---|---|
| ²⁾ after 6 h too brittle for detaching from plate; samples with acrylate are significantly less brittle than samples without acrylate | | | | | | | | | | |

### Comparative Example 7 and Examples 11 and 12:

In Comparative Example 3 and Examples 11 and 12, respectively, the amine component, more specifically a polyamine functioning as a hardener component, of a two-component epoxy system according to the present invention was varied. The respective parts (A) and (B) were mixed separately. The respective components and amounts of the PTAs and PTBs as well as the ratios thereof are reported in Table 5 below. Thereafter, parts (A) and (B) were mixed for 1 min at 1000 rpm using a speed mixer. The results of the viscosity measurement, the recorded pot life and the recorded drying time as well as elongation at break and tensile strength of the obtained specimen are also reported in Table 5.

**Table 5**

| | **Comp. Ex. 7** | | **Ex. 11** | | **Ex. 12** | |
|---|---|---|---|---|---|---|
| **Ratio PTA/PTB** | 100/69 | | 100/55 | | 100/55 | |
| | PTA [wt.%] | PTB [wt.%] | PTA [wt.%] | PTB [wt.%] | PTA [wt.%] | PTB [wt.%] |
| Component | | | | | | |
| Epoxy resin A | 80.00 | | 80.00 | | 80.00 | |
| TEGDMA | | | 5.00 | | | |
| NPGDMA | | | | | 5.00 | |
| A-resin dimethacrylate | | | 15.00 | | 15.00 | |
| ABL | 0.50 | | 0.50 | | 0.50 | |
| Byk 088 | 1.00 | | 1.00 | | 1.00 | |
| 4,4'-Methylenebis-(cyclohexylamine) | | 15.00 | | 15.00 | | 15.00 |
| Cu-TMEDA solution | | 0.30 | | 0.30 | | 0.30 |
| Bis-(2-dimethylaminoethyl) urea | | 4.70 | | 4.70 | | 4.70 |
| Viscosity [mPas] | 10970 | | 3551 | | 3279 | |
| Pot life [min] | 15 (solid) | | 55 (solid) | | 60 (solid) | |
| Drying time [min] | 80 | | 135 Minuten | | 175 Minuten | |
| Elongation at break [%] | ³⁾ | | ³⁾ | | ³⁾ | |
| Tensile strength [MPa] | ³⁾ | | ³⁾ | | ³⁾ | |

| | | | | | | |
|---|---|---|---|---|---|---|
| ³⁾ after 6 h too brittle for detaching from plate; samples with acrylate are significantly less brittle than samples without acrylate | | | | | | |

### Comparative Examples 8 and 9 and Examples 13 to 16:

In these Comparative Examples and Examples, respectively, the epoxy component of a two-component epoxy system according to the present invention was varied. In addition, the amine component of the two-component epoxy system according to the present invention was also varied. The respective parts (A) and (B) were mixed separately. The respective components and amounts of the PTAs and PTBs as well as the ratios thereof are reported in Table 6 below. Thereafter, parts (A) and (B) were mixed for 1 min at 1000 rpm using a speed mixer. In Comparative Example 9 and in Examples 14 and 16, the reactive mixture was cloudy white and separated after some time. When coating the mixture onto a substrate, a wetting disorder occurred, and afterwards significant cracks were observed in the coating. The results of the viscosity measurement, the recorded pot life and the recorded drying time as well as elongation at break and tensile strength of the obtained specimen are also reported in Table 6.

**Table 6**

| | **Comp. Ex. 8** | | **Comp. Ex. 9** | | **Ex. 13** | | **Ex. 14** | | **Ex. 15** | | **Ex. 16** | |
|---|---|---|---|---|---|---|---|---|---|---|---|---|
| **Ratio PTA/PTB** | 100/72 | | 100/106 | | 100/58 | | 100/85 | | 100/58 | | 100/85 | |
| | PTA [wt.%] | PTB [wt.%] | PTA [wt.%] | PTB [wt.%] | PTA [wt.%] | PTB [wt.%] | PTA [wt.%] | PTB [wt.%] | PTA [wt.%] | PTB [wt.%] | PTA [wt.%] | PTB [wt.%] |
| **Component** | | | | | | | | | | | | |
| Epoxy novolac resin | 80.00 | | 80.00 | | 80.00 | | 80.00 | | 80.00 | | 80.00 | |
| TEGDMA | | | | | 10.00 | | 10.00 | | | | | |
| NPGDMA | | | | | | | | | 10.00 | | 10.00 | |
| A-resin dimethacrylate | | | | | 10.00 | | 10.00 | | 10.00 | | 10.00 | |
| ABL | 0.50 | | 0.50 | | 0.50 | | 0.50 | | 0.50 | | 0.50 | |
| Byk 088 | 1.00 | | 1.00 | | 1.00 | | 1.00 | | 1.00 | | 1.00 | |
| 4,4'-Methylene-bis(cyclohexyl-amine) | | 75.00 | | | | 75.00 | | | | 75.00 | | |
| Dimer diamine | | | | 75.00 | | | | 75.00 | | | | 75.00 |
| Cu-TMEDA solution | | 1.50 | | 1.50 | | 1.50 | | 1.50 | | 1.50 | | 1.50 |
| Bis-(2-dimethyl-aminoethyl) urea | | 23.50 | | 23.50 | | 23.50 | | 23.50 | | 23.50 | | 23.50 |
| Viscosity [mPas] | 36900 | | 36900 | | 8689 | | 8689 | | 8122 | | 8122 | |
| Pot life [min] | 10 (solid) | | ⁵⁾ | | 25 (solid) | | ⁵⁾ | | 25 (solid) | | ⁵⁾ | |
| Drying time [min] | 60 | | ⁶⁾ | | 145 | | ⁶⁾ | | 190 | | ⁶⁾ | |
| Elongation at break [%] | ⁴⁾ | | ⁷⁾ | | ⁴⁾ | | ⁷⁾ | | ⁴⁾ | | ⁷⁾ | |
| Tensile strength [MPa] | ⁴⁾ | | ⁷⁾ | | ⁴⁾ | | ⁷⁾ | | ⁴⁾ | | ⁷⁾ | |

| | | | | | | | | | | | | |
|---|---|---|---|---|---|---|---|---|---|---|---|---|
| ⁴⁾ after 6 h too brittle for detaching from plate; samples with acrylate are significantly less brittle than samples without acrylate ⁵⁾ after about 60 minutes the bottom layer was solid while the top layer was liquid ⁶⁾ after 24 h still sticky and soft, no hardening, with methacrylate ⁷⁾ after 24 h too sticky and soft, no hardening, even no hardening after 7 days, with methacrylate | | | | | | | | | | | | |

### Comparative Examples 10 to 12 and Examples 17 to 19:

In these Comparative Examples and Examples, respectively, the metal catalyst of a two-component epoxy system according to the present invention was varied. The respective parts (A) and (B) were mixed separately. The respective components and amounts of the PTAs and PTBs as well as the ratios thereof are reported in Table 7 below. Thereafter, parts (A) and (B) were mixed for 1 min at 1000 rpm using a speed mixer. The results of the viscosity measurement and, the observed pot life are also reported in Table 7. The observed drying behaviour was as follows:
Comparative Examples 10, 11 and 12: after 60 minutes there was a skin, and the sample was still soft. After 120 minutes, there was a strong attraction and the sample was slightly sticky. After 16 hours, the sample was slightly sticky, and after 24 hours the sample was slightly sticky with observable fingerprint. After 36 hours, no further change was observed.

Example 17: after 60 minutes there was a skin, and the sample was still soft. After 120 minutes, there was light skin, and the sample was still soft. After about 16 hours the sample was slightly sticky, and after 24 hours the sample was still sticky with observable fingerprint. After about 36 hours, no further change was observed.

Example 18: after 60 minutes there was a skin, and the sample was still soft. After 120 minutes, there was light skin, and the sample was still soft. After about 16 hours the sample was slightly sticky, and after 24 hours the sample was only subjectively sticky without observable fingerprint. After about 36 hours, no further change was observed.

Example 19: after 60 minutes there was a skin, and the sample was still soft. After 120 minutes, there was light skin, and the sample was still soft. After about 16 hours the sample was strongly sticky, and after 24 hours the sample was still sticky with observable fingerprint. After about 36 hours, no further change was observed.

**Table 7**

| | **Comp. Ex. 10** | | **Comp. Ex. 11** | | **Comp. Ex. 12** | | **Ex. 17** | | **Ex. 18** | | **Ex. 19** | |
|---|---|---|---|---|---|---|---|---|---|---|---|---|
| **Ratio PTA/PTB** | 100/25 | | 100/25 | | 100/25 | | 100/20 | | 100/20 | | 100/20 | |
| | PTA [wt.%] | PTB [wt.%] | PTA [wt.%] | PTB [wt.%] | PTA [wt.%] | PTB [wt.%] | PTA [wt.%] | PTB [wt.%] | PTA [wt.%] | PTB [wt.%] | PTA [wt.%] | PTB [wt.%] |
| **Component** | | | | | | | | | | | | |
| Epoxy resin A | 80.00 | | 80.00 | | 80.00 | | 80.00 | | 80.00 | | 80.00 | |
| TEGDMA | | | | | 5.00 | | 5.00 | | 5.00 | | 5.00 | |
| A-resin dimethacrylate | | | | | 15.00 | | 15.00 | | 15.00 | | 15.00 | |
| ABL | 0.50 | | 0.50 | | 0.50 | | 0.50 | | 0.50 | | 0.50 | |
| Byk 088 | 1.00 | | 1.00 | | 1.00 | | 1.00 | | 1.00 | | 1.00 | |
| 1,3-BAC | | 15.00 | | 15.00 | | 15.00 | | 15.00 | | 15.00 | | 15.00 |
| Cu-TMEDA solution | | 0.30 | | | | | | 0.30 | | | | |
| Fe-complex chloride | | | | 0.50 | | | | | | 0.50 | | |
| Mn decanoate | | | | | | 0.50 | | | | | | 0.50 |
| Bis-(2-dimethylaminoethyl) urea | | 4.70 | | 4.70 | | 4.70 | | 4.70 | | 4.70 | | 4.70 |
| Viscosity [mPas] | 10680m | | 10680 | | 10680 | | 3847 | | 3847 | | | |
| Pot life [min] | 35 (solid) | | 25 (solid) | | 15 (solid) | | 65 | | 42 (solid) | | 22 (solid) | |

The results of the Examples and Comparative Examples reported herein demonstrate in particular the following advantages of a two-component epoxy system according to the present invention:
- The (meth)acrylate component leads to a reduction of the viscosity and thereby to significantly improved flow properties.
- The (meth)acrylate component further significantly prolongs the processing time, or pot life, of the two-component epoxy system, for example from about 30 minutes to about 1 to 2 hours.
- After hardening, the samples containing (meth)acrylate show significantly reduced brittleness compared to the (meth)acrylate-free samples.
- There is a tendency for a two-component epoxy system according to the present invention to show an increased chemical resistance due to the addition of the (meth)acrylate component.
- The drying time of the two-component epoxy system is slightly prolonged due to the added (meth)acrylate component, but in a very moderate way, for example from 2 to 3 hours, which is however practically still very acceptable. Accordingly, a good balance between drying time on the one hand and the above-mentioned advantages of the (meth)acrylate component is achieved.

## Claims

1. A two-component epoxy system, comprising:
a part (A) comprising at least one epoxide bearing two or more epoxy groups and at least one (meth)acrylate, and
a part (B) comprising at least one amine and at least one metal catalyst,
wherein parts (A) and (B) are physically separated from each other.

2. The two-component epoxy system according to claim 1, wherein the at least one (meth)acrylate bears two or more (meth)acrylic groups.

3. The two-component epoxy system according to claim 1 or 2, wherein the (meth)acrylate is selected from the group consisting of triethylene glycol dimethacrylate, butandiol dimethacrylate, hexandiol dimethacrylate, decandiol dimethacrylate, neopentyl glycol dimethacrylate, and trimethylolpropane trimethacrylate.

4. The two-component epoxy system according at least one of the preceding claims, wherein the metal catalyst is selected from the group consisting of a copper catalyst, an iron catalyst, a manganese catalyst, a cobalt catalyst, a tin catalyst, a cerium catalyst, a zirconium catalyst and a vanadium catalyst.

5. The two-component epoxy system according to claim 4, wherein the metal catalyst is selected from the group consisting of a copper catalyst, an iron catalyst and a manganese catalyst.

6. The two-component epoxy system according to at least one of the preceding claims, wherein the at least one epoxide is selected from the group consisting of bisphenol A diglycidyl ether, bisphenol F diglycidyl ether and polyfunctional phenol novolac glycidyl ether.

7. The two-component epoxy system according to at least one of the preceding claims, wherein the at least one amine is selected from the group consisting of 1,3-bis(aminomethyl)cyclohexane, IPDA, MXDA, TMD, polyether-polyamines, 4,4'-methylenebis(cyclohexylamine), and a fatty acid dimer diamine.

8. The two-component epoxy system according to at least one of the preceding claims, wherein a coating prepared from the two-component epoxy system has a viscosity of ≤ 6,000 mPas.

9. The two-component epoxy system according to at least one of the preceding claims, wherein part (A) additionally comprises a C-H-acidic compound or an N-H-acidic compound.

10. The two-component epoxy system according to at least one of the preceding claims, wherein the two-component epoxy system is free of any mercapto compound.

11. A coating prepared from a two-component epoxy system according to at least one of the preceding claims by mixing parts (A) and (B).

12. The coating of claim 11, wherein the coating comprises the at least one (meth)acrylate in polymerized form.

13. Use of a two-component epoxy system according to at least one of claims 1 to 10 for coating a substrate.

14. A coating method, comprising the steps:
(i) providing a substrate, and
(ii) coating the substrate by mixing parts (A) and (B) of a two-component epoxy system according to at least one of claims 1 to 10 and applying the resulting mixture onto the substrate.

15. The coating method of claim 14, wherein in step (ii) a radical polymerization of the at least one (meth)acrylate occurs.
